# EUROPEAN PATENT SPECIFICATION

(11) **EP 3 889 818 B1**
(45) Date of publication and mention of the grant of the patent: **16.08.2023**
(21) Application number: 20315093.3
(22) Date of filing: 01.04.2020
(51) Int. Cl.: G06F 21/88, G06F 21/44, G01S 5/00, H04W 4/80, H04W 12/00, H04W 12/12, H04W 4/02, H04W 4/029, H04L 9/32, H04L 9/40, H04W 4/06, H04W 12/126, H04W 4/18, H04W 12/50, H04W 12/79, H04W 12/63

(54) **A METHOD FOR LOCATING A TAG**
VERFAHREN ZUM LOKALISIEREN EINES ETIKETTS
PROCÉDÉ PERMETTANT DE LOCALISER UNE ÉTIQUETTE

(43) Date of publication of application: 06.10.2021
(73) Proprietor: Thales Dis France SAS, 92190 Meudon (FR)
(72) Inventor: Delsuc, Julien, 13881 Gemenos Cedex (FR); Courtiade, Fabien, 13881 Gemenos Cedex (FR); Sieprawski, Nicolas, 13881 Gemenos Cedex (FR)
(74) Representative: Scheer, Luc

(56) References cited:
- EP-A2- 2 780 900
- US-A1- 2011 291 803
- US-A1- 2020 021 945

## Description

The present invention concerns telecommunications and in particular a method allowing a user of a telecommunication terminal, like for example a mobile phone, a PDA, a smartphone, a smart watch or a tablet to locate an active tag or any active RFID device. At present, in the field of confidentiality and security, many confidential items, including confidential CDs, USB flash drives, door keys, notebooks, and documents, etc., lack effective anti-lost control, and there is a potential risk of loss. Therefore, it is particularly important to prevent the loss of confidential or personal items.

In the current related technical field, the anti-lost system based on active RFID technology is not extensive, but mainly adopts the Bluetooth technology system or passive RFID technology. However, the Bluetooth technology has the disadvantage of being easily obstructed, and the passive RFID technology causes a battery issue at the detection end.

Today, we can find systems that allow to use fleet of devices to remotely find an object thanks to a radio emitting tag (BLE) attached to the device. Those system rely on the collaboration of several phones through a web server. This is called Collaborative Object Location. There are however several privacy concerns with this solution:
1- The server is aware of what object is lost, of the position of all the objects it manages;
2- The application running on the phones may be compromised and their data may be also collected by hackers;
3- The tags usually broadcast a static identifier that allows easily tracking of their owner.

The known solutions are therefore not GDPR (General Data Protection Regulation) compliant.

Such solutions are for example described in US 2020/0021945, US 2016/0105766 and US 2016/0373894 from Tile Inc.

The purpose of the present invention is to propose a method allowing a user of a telecommunication terminal to locate a tag to which an object is attached by using this Collaborative Object Location without privacy concerns.

Thus, the present invention proposes a method for locating a tag, the tag having been paired during a pairing step for sharing a secret key between the tag and a first telecommunication terminal, the method comprising:
i- Sending from the first telecommunication terminal to a remote server:
   - a challenge encrypted by the secret key;
   - an approximate location indication of the tag defining a search zone,
ii- Sending from the remote server to at least one second telecommunication terminal present in the search zone the encrypted challenge;
iii- When having received a dynamic message from the tag, sending from the at least second telecommunication terminal to the tag, the encrypted challenge;
iv- Decrypting the encrypted challenge in the tag and sending the challenge to the at least second telecommunication terminal;
v- Sending from the at least second telecommunication terminal to the first telecommunication terminal, through the remote server, the challenge and the location of the at least second telecommunication terminal;
vi- Verifying the challenge at the first telecommunication terminal.

Preferably, steps -iii- and -iv- are executed in UWB in order to compute a proven distance between the second terminal and the tag thanks to time of flight measurement. Advantageously, an AES algorithm is used for encrypting the challenge by the secret key.

Preferably, if the step -vi- indicates that the challenge is the one sent at step -i- :
- the first telecommunication terminal sends to the tag a command to emit a sound or light, or
- the first telecommunication terminal sends to the second telecommunication terminal a message asking the second telecommunication terminal to send to the tag a command to emit a sound or light.

Advantageously, the challenge is accompanied by a checksum, like a MAC for example. The present invention will be better understood by reading the following description of a preferred embodiment of the invention in view of the figures that represent:
- Figure 1 the pairing between a telecommunication terminal and a tag;
- Figure 2 a preferred embodiment of the method of the invention.

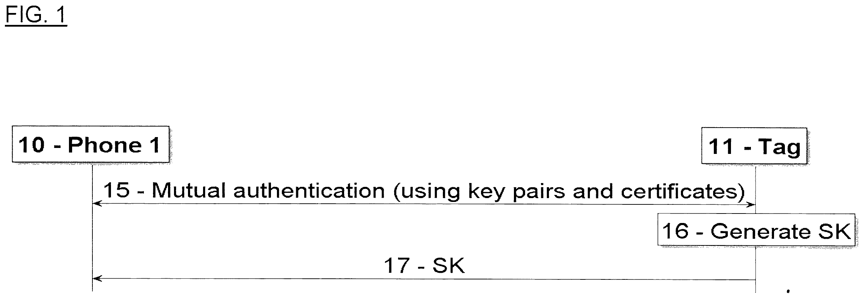

Figure 1 represents the pairing between a telecommunication terminal and a tag.

A telecommunication terminal is here constituted by a mobile phone 10 called Phone 1. It will be hereinafter be called first telecommunication terminal. It could also be a PDA, a smartphone or a personal computer for example.

The telecommunication terminal 10 is able to communicate wirelessly or not with a tag 11 having preferably a BLE (Bluetooth Low Energy) interface or a UWB (Ultra Wide Band) interface.

After having established a mutual authentication (step 15) between the telecommunication terminal 10 and the tag 11, by using key pairs and certificated, the tag 11 is able to generate a secret key SK (step 16) and to transmit it to the telecommunication terminal 10 (step 17). Alternatively, the telecommunication terminal 10 can also generate this secret key SK and transmit it to the tag 11, the important point being that both the telecommunication terminal 10 and the tag 11 share the secret key SK at the end of the pairing process. As will be seen later on, the key SK will be used as an AES (Advanced Encryption Standard) key.

So, in this first pairing step, a pairing is done between the telecommunication terminal 10 and the tag 11, both of them containing pairs of asymmetric keys (PKI using certificate and private keys). A secure channel is established thanks to those keys and a secret pairing key SK is shared.

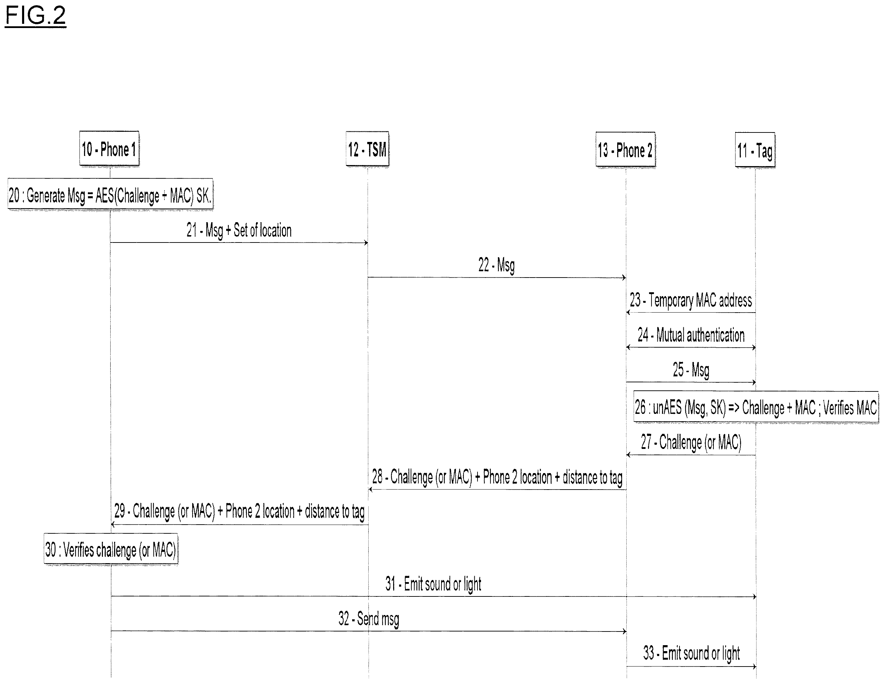

Figure 2 represents a preferred embodiment of the method of the invention.

In this figure, the first telecommunication terminal 10 and the tag 11 of figure 1 are represented. The other technical elements entering in action in the method of the invention are a TSM 12 (Trusted Service Manager) and at least a second telecommunication terminal 13. The TSM is owned by the Mobile Network Operator (MNO) managing the communications of the telecommunication terminals 10 and 13 (and a fleet of other telecommunication terminals).

It is here supposed that the user of the first telecommunication terminal 10 has lost an object (for example his home keys) attached to his tag 11, that has been paired previously (in regard of figure 1).

In this case, at step 20 and at the request of the user of the first telecommunication terminal 10, an application located in this first telecommunication terminal 10 or in its secure element (UICC, eUICC or iUICC) generates a message Msg being preferably an AES of a challenge and an optional checksum, for example a MAC (Message Authentication Code). The checksum can be used for verifying the integrity of the challenge since this checksum is computed on the challenge. The key for calculating the AES is the secret key SK.

The AES algorithm is preferably used for encrypting the challenge (and optionally the checksum) by the secret key SK. It is also possible to use DES or 3DES. An asymmetric crypto scheme can also be used.

This message, being a cryptogram, is sent at step 21 to the TSM 12 (a remote server) with a set of locations defining an approximate location indication of the tag defining a search zone. This approximate location is for example the last place where the user thinks having lost his keys (the last location where he remembers having probably let his keys for example).

Such a location can be obtained through various applications, for example Google^{™} if the user has accepted that his past and current positions (places where he physically was) was registered by Google^{™}. An API located in the first telecommunication terminal 10 can also indicate the zones were the user was recently.

The TSM 12 then sends at step 22 the message Msg to all terminals being in the area of the defined location.

The tag 11 periodically, for example every minute, sends a dynamic advertising message "I am here" with a temporary MAC address (Media Address Control) to all surrounding telecommunication terminals in its neighborhood. This MAC address is a temporary identifier for privacy reasons (the tag cannot being tracked) and regularly changed by the tag 11.

If one of the second telecommunication terminals is in the proximity of this tag 11, it will receive this dynamic message and it will be able to send the message Msg to the tag 11 (step 25) after an optional mutual authentication (step 24). This mutual authentication (using key pairs and certificate) ensures that the tag is really a tag having been paired according to figure 1 with a terminal belonging to the fleet of terminals of the MNO.

The tag 11 then decrypts the received message Msg thanks to its registered key SK to retrieve the challenge (step 26) and optionally verifies the checksum if present. The optional verification of the checksum is performed in order to verify that the challenge has not been modified during steps 21 to 25.

The tag, possibly after optional checksum verification being successful, can then send (step 27) to the second telecommunication terminal(s) 13 the challenge (and optionally the MAC).

This one will then forward (at step 28) the challenge (and optionally the checksum (MAC)) to the TSM 12 along with its phone location and optionally its distance to the tag 11. This distance can be precisely obtained if the tag and the second telecommunication terminal 13 have a UWB connection. UWB leverages Time of Flight (ToF) which is a method for measuring the distance between two radio transceivers by multiplying the ToF of the signal by the speed of light.

So, preferably steps 23, 25 and 27 are executed in UWB in order to allow also a computing of a proven distance between the second terminal 13 and the tag 11 thanks, to the ToF measurement.

At step 29, the TSM 12 forwards the received message to the first telecommunication terminal 10. This one can then verify (step 30) the challenge (and/or the MAC).

If the received challenge and/or the received MAC corresponds to those that were sent at step 21, the first telecommunication terminal 10 has authentified the tag 11 and knows the location of this tag. The user can then optionally ask the first telecommunication terminal 10 to send to the tag 11 a command (step 31) to emit a sound or light. The tag must therefore have telecommunications capabilities, at least for receiving such a command. It is also possible to send from the first telecommunication terminal 10 to the second telecommunication terminal 13 a message (step 32) asking the second telecommunication terminal 13 to send to the tag 11 a command (step 33) to emit a sound (beep) or light. The tag can in this way be easily found and get back by the user of the first telecommunication terminal 10.

The invention helps determining the location of an object using global device OEM network (a smartphone maker for example) without disclosing the identity of the device that retrieved the searched object.

The advantages of the invention are the following:
- The tag 11 does not have any static identifier, so it cannot be tracked neither by the intermediary phone 13 nor the server 12.
- Strong authentication is introduced so only genuine phones and tags will be able to interact.
- Anonymous cannot send any command to the tag (since a shared secret key SK is used).
- The precise location enabled by UWB can only be used with prior authentication. So even if anyone can detect the tag by sniffing, he won't access to its precise location.
- It relies on existing TSM servers.
- Fleet granularity can be defined at corporate organization level, family group, social organization, participants to an exhibition,....

## Claims

1. A method for locating a tag (11), said tag (11) having been paired during a pairing step for sharing a secret key between said tag (11) and a first telecommunication terminal (10), said method comprising:
i- Sending from said first telecommunication terminal (10) to a remote server (12):
- a challenge encrypted by said secret key;
- an approximate location indication of said tag (11) defining a search zone,
ii- Sending from said remote server (12) to at least one second telecommunication terminal (13) present in said search zone said encrypted challenge;
iii- When having received a dynamic message from said tag (11), sending from said at least second telecommunication terminal (13) to said tag (11), said encrypted challenge;
iv- Decrypting said encrypted challenge in said tag (11) and sending said challenge to said at least second telecommunication terminal (13);
v- Sending from said at least second telecommunication terminal (13) to said first telecommunication terminal (10), through said remote server (12), said challenge and the location of said at least second telecommunication terminal (13);
vi- Verifying said challenge at said first telecommunication terminal (10);
vii- Determining at said first telecommunication terminal (10) the location of said tag (11) based on the verification of said challenge and the location of said second telecommunication terminal (13).

2. A method according to claim 1, wherein steps-iii- and -iv- are executed in UWB in order to compute a proven distance between said second terminal and said tag (11) thanks to time of flight measurement.

3. A method according to any of the claims 1 and 2, wherein an AES algorithm is used for encrypting said challenge by said secret key.

4. A method according to any of the claims 1 to 3, wherein if said step -vi- indicates that said challenge is the one sent at step -i- :
- said first telecommunication terminal (10) sends to said tag (11) a command to emit a sound or light, or
- said first telecommunication terminal (10) sends to said second telecommunication terminal (13) a message asking said second telecommunication terminal (13) to send to said tag (11) a command to emit a sound or light.

5. A method according to any of the claims 1 to 4, wherein said challenge is accompanied by a checksum.

## Patentansprüche

1. Verfahren zum Lokalisieren eines Tags (11), wobei das Tag (11) während eines Paarungsschritts zum Teilen eines geheimen Schlüssels zwischen dem Tag (11) und einem ersten Telekommunikationsendgerät (10) gepaart wurde, das Verfahren umfassend:
i- Senden von dem ersten Telekommunikationsendgerät (10) an einen entfernten Server (12):
- einer Challenge, die durch den geheimen Schlüssel verschlüsselt wird;
- einer ungefähren Standortangabe des Tags (11), die eine Suchzone definiert,
ii- Senden von dem entfernten Server (12) an mindestens ein zweites Telekommunikationsendgerät (13), das in der Suchzone vorhanden ist, der verschlüsselten Challenge;
iii- wenn eine dynamische Nachricht von dem Tag (11) empfangen wurde, Senden der verschlüsselten Challenge von dem mindestens zweiten Telekommunikationsendgerät (13) an das Tag (11);
iv- Entschlüsseln der verschlüsselten Challenge in dem Tag (11) und Senden der Challenge an das mindestens zweite Telekommunikationsendgerät (13);
v- Senden von dem mindestens zweiten Telekommunikationsendgerät (13) an das erste Telekommunikationsendgerät (10) durch den entfernten Server (12), der Challenge und des Standorts des mindestens zweiten Telekommunikationsendgeräts (13);
vi- Verifizieren der Challenge an dem ersten Telekommunikationsendgerät (10);
vii- Bestimmen an dem ersten Telekommunikationsendgerät (10) des Standorts des Tags (11) basierend auf der Verifizierung der Challenge und des Standorts des zweiten Telekommunikationsendgeräts (13).

2. Verfahren nach Anspruch 1, wobei Schritte -iii- und -iv- in UWB ausgeführt werden, um eine bewährte Entfernung zwischen dem zweiten Endgerät und dem Tag (11) durch eine Flugzeitmessung zu berechnen.

3. Verfahren nach einem der Ansprüche 1 und 2, wobei ein AES-Algorithmus zum Verschlüsseln der Challenge durch den geheimen Schlüssel verwendet wird.

4. Verfahren nach einem der Ansprüche 1 bis 3, wobei, falls der Schritt -viangibt, dass die Challenge die in Schritt -i- gesendete ist:
- das erste Telekommunikationsendgerät (10) an das Tag (11) einen Befehl sendet, um einen Ton oder Licht zu emittieren, oder
- das erste Telekommunikationsendgerät (10) eine Nachricht an das zweite Telekommunikationsendgerät (13) sendet, um das zweite Telekommunikationsendgerät (13) aufzufordern, einen Befehl zum Emittieren eines Tons oder Lichts an das Tag (11) zu senden.

5. Verfahren nach einem der Ansprüche 1 bis 4, wobei die Challenge von einer Prüfsumme begleitet wird.

## Revendications

1. Procédé permettant de localiser une étiquette (11), ladite étiquette (11) ayant été appariée pendant une étape d'appairage pour partager une clé secrète entre ladite étiquette (11) et un premier terminal de télécommunication (10), ledit procédé comprenant :
i- l'envoi à partir dudit premier terminal de télécommunication (10) vers un serveur distant (12) :
- d'un challenge chiffré par ladite clé secrète ;
- d'une indication de localisation approximative de ladite étiquette (11) définissant une zone de recherche,
ii- l'envoi à partir dudit serveur distant (12) vers au moins un second terminal de télécommunication (13) présent dans ladite zone de recherche dudit challenge chiffré ;
iii- lorsque l'on a reçu un message dynamique en provenance de ladite étiquette (11), l'envoi à partir dudit au moins second terminal de télécommunication (13) vers ladite étiquette (11), dudit challenge chiffré ;
iv- le déchiffrement dudit challenge chiffré dans ladite étiquette (11) et l'envoi dudit challenge audit au moins second terminal de télécommunication (13) ;
v- l'envoi à partir dudit au moins second terminal de télécommunication (13) vers ledit premier terminal de télécommunication (10), par l'intermédiaire dudit serveur distant (12), dudit challenge et de la localisation dudit au moins second terminal de télécommunication (13) ;
vi- la vérification dudit challenge au niveau dudit premier terminal de télécommunication (10) ;
vii- la détermination au niveau dudit premier terminal de télécommunication (10) de la localisation de ladite étiquette (11) en fonction de la vérification dudit challenge et de la localisation dudit second terminal de télécommunication (13).

2. Procédé selon la revendication 1, dans lequel les étapes -iii- et -iv- sont exécutées en UWB afin de calculer une distance prouvée entre ledit second terminal et ladite étiquette (11) grâce à une mesure de temps de vol.

3. Procédé selon l'une quelconque des revendications 1 et 2, dans lequel un algorithme AES est utilisé pour le chiffrement dudit challenge par ladite clé secrète.

4. Procédé selon l'une quelconque des revendications 1 à 3, dans lequel si ladite étape -vi- indique que ledit challenge est celui envoyé à l'étape -i- :
- ledit premier terminal de télécommunication (10) envoie à ladite étiquette (11) une commande pour émettre un son ou de la lumière, ou
- ledit premier terminal de télécommunication (10) envoie audit second terminal de télécommunication (13) un message demandant audit second terminal de télécommunication (13) d'envoyer à ladite étiquette (11) une commande pour émettre un son ou de la lumière.

5. Procédé selon l'une quelconque des revendications 1 à 4, dans lequel ledit challenge est accompagné d'une somme de contrôle.
